# EUROPEAN PATENT SPECIFICATION

(11) **EP 4 627 705 B1**
(45) Date of publication and mention of the grant of the patent: **18.11.2026**
(21) Application number: 23813731.9
(22) Date of filing: 28.11.2023
(51) Int. Cl.: H02K 44/04

(54) **CURRENT-PROTECTED ELECTROMAGNETIC PUMP ARRANGEMENT AND METHOD**
STROMGESCHÜTZTE ELEKTROMAGNETISCHE PUMPENANORDNUNG UND VERFAHREN
AGENCEMENT DE POMPE ÉLECTROMAGNÉTIQUE À PROTECTION CONTRE LE COURANT ET PROCÉDÉ

(30) Priority: 01.12.2022 EP 22210856
(43) Date of publication of application: 08.10.2025
(73) Proprietor: Excillum AB, 164 40 Kista (SE)
(72) Inventor: LUNDSTRÖM, Ulf, 164 40 Kista (SE)
(74) Representative: AWA Sweden AB
(86) International application number: PCT/EP2023/083394
(87) International publication number: WO 2024/115503

(56) References cited:
- JP-A- H0 928 075
- US-A- 3 022 401
- US-A- 3 284 670
- US-A- 4 953 191
- US-A1- 2012 057 680
- US-A1- 2022 230 832

## Description

### Technical field

The present disclosure relates to arrangements and methods in connection with electromagnetic pumps.

### Background

Electromagnetic pumps are known in the art, such as in US4953191A. Such pumps work according to the principle that if an electric current is applied upon an electrically conductive liquid flowing in a conduit through a magnetic field then a force will be exerted on the liquid, thereby producing a pumping action along the conduit.

The raising of the pressure in the electrically conductive liquid is achieved by the force resulting from the interaction between the magnetic field and the electric current flowing through the liquid. The direction of the force is generally perpendicular to the plane comprising both the direction of the electric current and the magnetic field, and by orienting this plane substantially perpendicular to the length direction of the conduit, a flow of the liquid may thus be induced through the conduit. The magnetic force on a current-carrying conductor may generally be expressed as $d \vec{F} = I d \vec{l} \times \vec{B}$ (1) In other words, the generated force is perpendicular to both the magnetic field and the electric current and only the components of the field and the current perpendicular to each other contribute to the generated force. The magnetic force, and hence the flow of the liquid, is affected by the strength of the magnetic field, the current flowing through the liquid, and the length of the conduit over which the magnetic force acts. Further, the strength of the magnetic force will be dependent on the angle that the magnetic field makes with the direction of the electric current. Preferably, the magnetic field is perpendicular to the direction of the electric current in order to provide a maximum magnetic force. The magnetic field may, for example, be arranged at an angle of between 70 to 110 degrees with respect to the direction of the electric current. Furthermore, the pressure provided by the electromagnetic pump may be proportional to a number of conduit sections arranged in the electromagnetic pump. The magnetic field may typically be realized with the aid of one or more permanent magnets whereas the current may be supplied from a direct current power supply.

For high-pressure electromagnetic pumps, it may be required to apply a high electrical current for achieving the desired pumping action. For example, the current may be as high as several hundreds of amperes. The present disclosure is directed to solving one or more problems that may then arise. Corresponding problems may also arise at lower electrical currents, and the teachings herein are equally applicable also for such lower-current electromagnetic pumps.

### Summary

One problem that has been identified, and that the technology disclosed herein intends to address, is that the conductive liquid being pumped by the electromagnetic pump may constitute an electrical loop between the pump outlet and the pump inlet. Hence, an electrical current applied across the electromagnetic pump will experience such electrical loop as a parasitic circuit connected in parallel to the pump. A non-negligible amount of electrical current (i.e. a leakage current) may then flow through such loop between the pump outlet and the pump inlet, and cause various problems both directly and indirectly (e.g. due to electromagnetic fields induced by the current).

In particular, when such electromagnetic pump is used for pumping liquid metal in a liquid metal jet X-ray source, a leakage current of this kind may cause undesirable heating, may adversely affect a nozzle used for forming the liquid jet, and may induce an electromagnetic field that adversely affects an electron beam used for generating the X-ray radiation.

Therefore, it is a general object of the present disclosure to provide a solution that mitigates problems relating to such leakage current along a path outside the pump between the pump outlet and the pump inlet.

Common to many of the solutions proposed herein is that the leakage current is confined to regions or portions along the path of the conductive liquid where heating and/or induced electromagnetic fields do not cause any significant problems.

Various other solutions which increase the resistance in the parallel circuit are proposed. Common to the solutions proposed herein is that some type of resistance-increasing or current limiting measure (current limiter) is applied to the parallel circuit.

Further, solutions are proposed in which the parallel circuit is connected to ground potential at one or more locations to drastically reduce or eliminate any remaining leakage current from reaching some portions of the flow path (that may be particularly sensitive to the presence of electric current). A low-resistance current path can thus be provided between a point upstream of the electromagnetic pump and the current limiter and a point downstream of the electromagnetic pump and the current limiter.

Common goals of all proposed solutions are to provide for a low and constant leakage current. Since a varying leakage current corresponds to a varying current through the electromagnetic pump this would also imply a varying pump performance. Thus, the current limiter may be configured so that the current through the parallel circuit is less than 10% of the current passing through the electromagnetic pump. Furthermore, the current limiter may be configured such that a variation of the current through the parallel circuit is less than 10% of its average value.

The invention is defined by the subject-matter of the independent claim 1. The first implementation, described with reference to Figures 1a to 1b, the second implementation with reference to Figure 2, and the corresponding passages of the description, falls within the scope of the claimed invention. The third and fourth embodiments, described with reference to Figures 3 to 4, and the corresponding passages of the description, do not fall within the scope of the claimed invention and are provided only as examples useful for understanding the invention.

### Brief description of the drawings

In the following detailed description, reference is made to the accompanying drawings, on which:

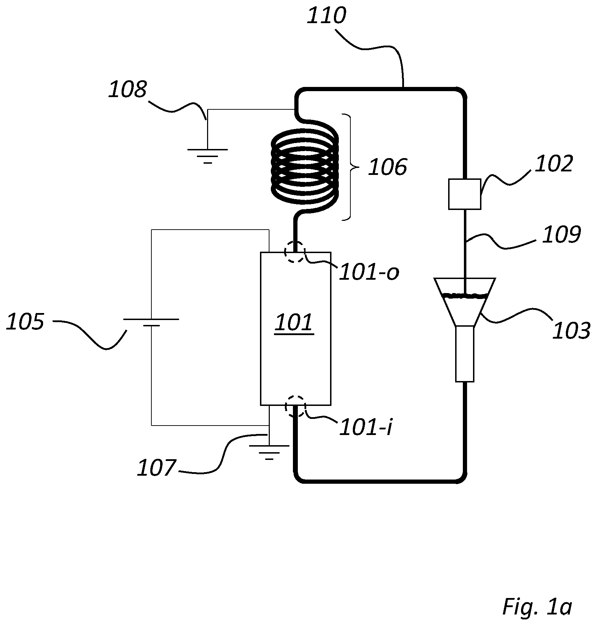

Fig. 1a schematically shows a first implementation according to the principles disclosed herein;

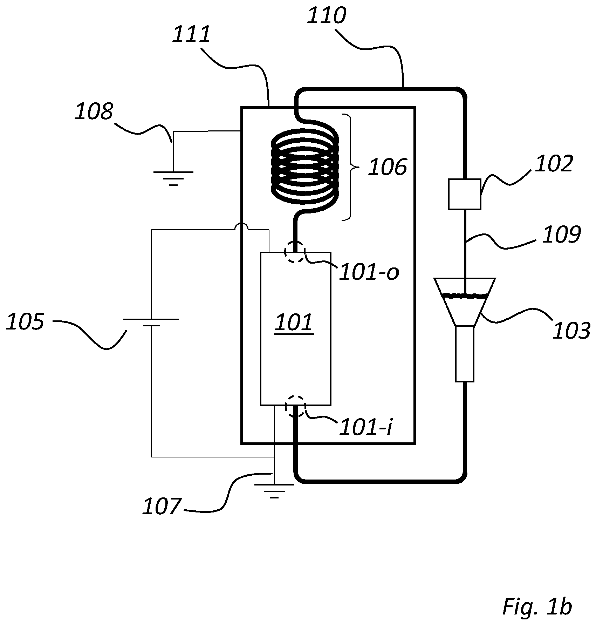

Fig. 1b schematically shows a variant of the first implementation;

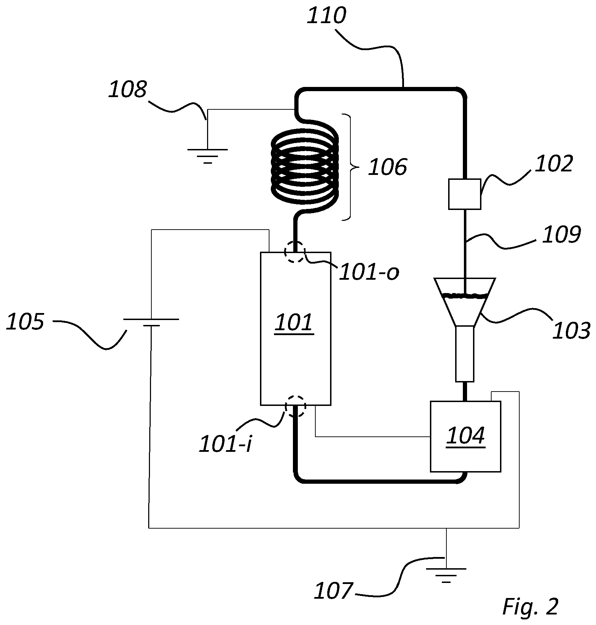

Fig. 2 schematically shows a second implementation according to the principles disclosed herein;

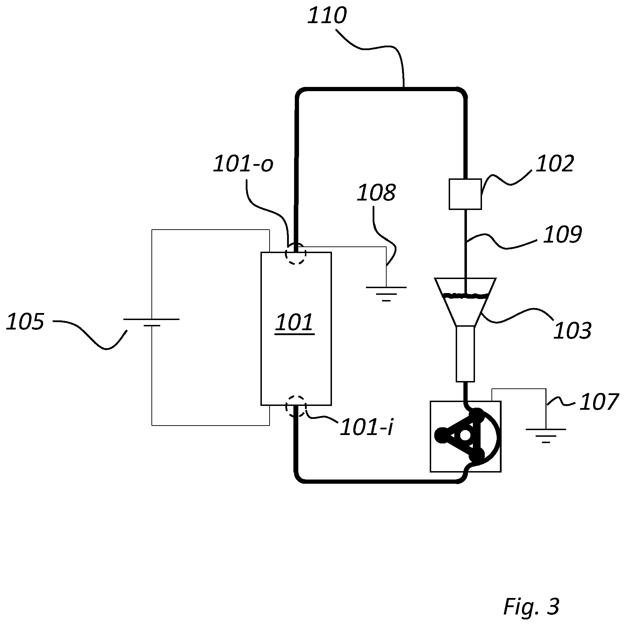

Fig. 3 schematically shows a third implementation according to the principles disclosed herein;

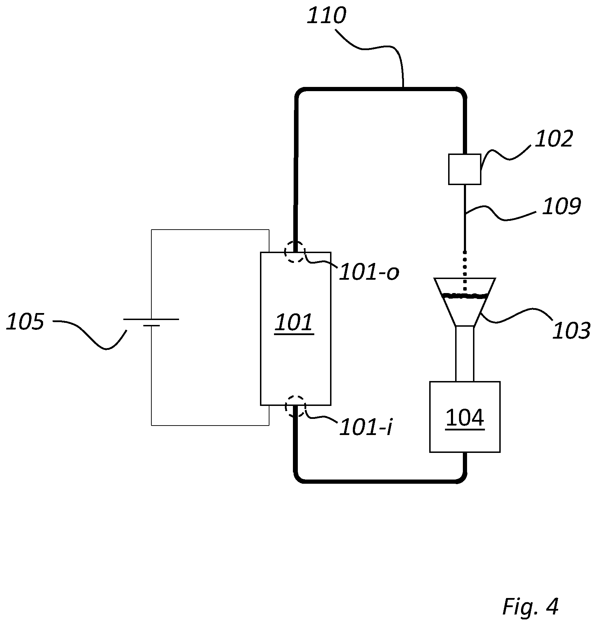

Fig. 4 schematically shows a fourth implementation according to the principles disclosed herein; and

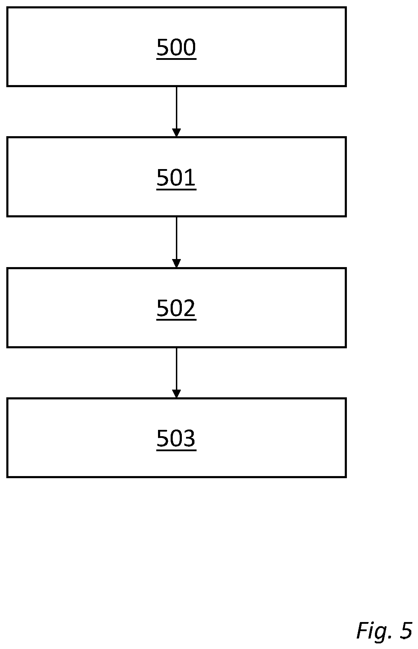

Fig. 5 outlines a method according to the principles disclosed herein.
In the figures, corresponding parts are designated corresponding reference numerals throughout.

### Detailed description

A first example of an implementation of the teachings herein is schematically shown in Fig. 1a. An electromagnetic pump 101 having an inlet 101-i and an outlet 101-o is provided to supply liquid metal at a high pressure (> 50 bar) to a nozzle 102. A jet 109 of liquid metal is ejected from the nozzle 102 and collected at a receiver 103. The receiver is connected to the inlet 101-i of the electromagnetic pump 101 so that the liquid metal may circulate through the system. The electromagnetic pump may comprise a conduit providing at least a part of a flow path from inlet 101-i to outlet 101-o. Electrical connections may be arranged to provide for an electric current flowing through a cross-section of said conduit. An arrangement for providing a magnetic field may be configured to generate a magnetic field through said cross-section in a direction non-parallel to said current flow. Preferably, the relative orientation of the current flow and the magnetic field is substantially perpendicular. In some implementations, a pre-pump may be provided between the receiver 103 and the inlet 101-i to assist in circulating the liquid metal and/or to provide a suitable inlet pressure for the main pump 101. Current is drawn through the electromagnetic pump by a direct current power supply 105. The liquid metal is circulated using a conduit 110 that connects the pump outlet 101-o to the nozzle 102. As will be appreciated, a similar pipe connects the receiver 103 to the pump inlet 101-i. To prevent current from also flowing through the nozzle 102, the jet 109, and the receiver 103 in a circuit parallel with the pump 101, a current limiter between the outlet from the pump 101 and the nozzle 102 is provided in the form of a conduit extension of sufficient length as shown at reference numeral 106. The conduit extension 106 is arranged so as to have an electrical resistance that is large compared to the resistance over the pump while at the same time having a small flow resistance. One way to accomplish this is to make the conduit extension 106 to have a sufficient length, as illustrated in Fig. 1a by a coiled section of the conduit. Furthermore, the conduit extension 106 may be provided with an insulating coating or be fixed with insulating clamps (not shown), to protect from short circuits which may affect the amount pf leakage current and thus the pump performance. An alternative may be to make the conduit extension from an electrically insulating material. In the latter case, the length of the conduit extension may be shorter than in the former to obtain the same current limiting effect since in this case only the liquid metal contributes to the electrical conduction. In general, it may be advantageous to provide the conduit extension with an electrical restriction to act as a current limiter. The electrical restriction may advantageously be implemented using combinations of high resistivity materials and/or geometrical arrangements. In this way, the required voltage can be maintained across the pump 101 in order to draw the electric current therethrough to pump the liquid metal. At the same time, flow of leakage electrical current through the nozzle 102, jet 109, and receiver 103 can be greatly reduced. As shown in the figure, the pump arrangement may also be connected to ground potential at the inlet 101-i to the pump as shown at reference numeral 107 and at the end of the conduit extension 106 as shown at reference numeral 108. Thus, points 107 and 108 will effectively be short circuited, or at least a low-resistance current path will be provided between these points, and negligible electrical current will flow through nozzle, jet, and jet receiver.

Conveniently, the pump 101 and the conduit extension 106 may be placed inside a box or housing 111, the walls of which are connected to electrical ground, as illustrated in Fig. 1b. The conduit 110 is then preferably electrically connected to the box 111 where the conduit 110 exits and enters the box 111, so that ground points are provided for the conduit. With such box, improved control of electrical currents, and thereby electrical fields, caused by the electromagnetic pump outside of the box is obtained. In principle, any electrical influence from the pump 101 outside of the box 111 may thereby be eliminated. Furthermore, the conduit 110 may be anchored within the box with insulating clamps (not shown) to prevent the possibility of short circuiting between different parts of the conduit or between the conduit and the box, thus ensuring stable pump performance. Although not shown in Figs. 2-4, such box may optionally be provided also in those implementations.

Another implementation is schematically shown in Fig. 2. This implementation is similar to that shown in Fig. 1a, except that an electromagnetic pre-pump 104 is included. The collected liquid metal is pumped to the electromagnetic pump 101 by the pre-pump 104. The purpose of the pre-pump is to raise the inlet pressure to the main electromagnetic pump. In this case, both the pre-pump 104 and the main pump 101 are fed by a common direct current power supply 105. This means that the nozzle 102, the jet 109, and the receiver 103 are protected from electrical current by a first ground point 108 at the end of the conduit extension 106 and a second ground point 107 at the inlet to the pre-pump.

Alternative embodiments include providing electrical insulation and/or interruption of liquid metal flow, or at least a reduction in the cross-sectional area through which the liquid metal flows, in pre-pump 104. This may be achieved e.g., by implementing the pre-pump 104 as an impeller in the flow path, by having a peristaltic pump as pre-pump, by having a gear pump as pre-pump or the like. In all these cases, electrically insulating materials are needed, e.g. polymers. One example implementation is schematically shown in Fig. 3, where the pre-pump is implemented as a peristaltic pump made from electrically insulating material. Thereby, the electrical circuit between the outlet 101-o and the inlet 101-i of the main pump 101 is effectively broken, or at least severely restricted, so that any flow of electrical current through the nozzle 102, the jet 109, and the receiver 103 is prevented or at least greatly reduced. Also in this embodiment, the arrangement may be grounded as indicated by numerals 107 at the inlet of the pre-pump and 108 at the outlet of the electromagnetic pump 101. By connecting the arrangement to ground potential in this way, an electrical shortcut is created between the outlet 101-o of the electromagnetic pump 101 and the inlet of the pre-pump, thus making the current flowing through the nozzle, jet, and receiver negligible. A potential draw back with this type of solutions, however, is that moving parts are introduced in the flow path, which is typically what the use of electromagnetic pumps is intended to avoid.

The jet 109 may in itself be used as a current limiter provided that sufficient electrical insulation is in place between the nozzle 102 and the receiver 103. Having the nozzle 102 and the receiver 103 at different electric potential will create an electric field that may require some compensation of an electron beam intended to impact the jet. Further alternatives include generating the jet 109 such that it breaks up into droplets, or at least separates from a continuous flow, before it reaches the receiver 103, as schematically shown in Fig. 4. Jet break-up may be effected by introducing a small disturbance in the liquid metal flow, e.g. by oscillating the nozzle 102. Relying on spontaneous jet break-up should be done in a manner such that there is no risk for intermittent short circuiting between the nozzle and the jet receiver, which could cause current rushes through the jet loop. Such jet break-up into droplets will cause an interruption in electrical conduction, thus effectively acting as a current limiter in the parallel path from the outlet 101-o to the inlet 101-i. However, a jet that breaks up into droplets will in many cases entail creation of small so called satellite droplets. This may in turn contribute to the level of debris present around the jet 109. The receiver 103 may also need to be adapted in some way to receive droplets instead of a continuous jet to avoid spatter of liquid metal that could disturb the operation of the apparatus where the pump arrangement is employed.

Another option is to interrupt the flow between the receiver 103 and the pre-pump 104 by introducing a plurality of openings through which the liquid metal is made to drip under gravity before reaching the pre-pump 104. In this way, the individual droplets will have a low velocity and the likelihood of creating deleterious debris will be correspondingly low, while the intended current-limiting effect is still provided. The receiver 103 and the pre-pump 104 need to be electrically insulated from each other to prevent electrical current from bypassing the flow interruption.

For an implementation where the electromagnetic pump comprises a (fluid-carrying) pipe or tube wound around a central member (e.g. an iron core of a magnetic circuit included in the pump) and where the current limiter is embodied as an extension of the same pipe, some observations regarding the length of the extension may be illustrative. To achieve the intended function, the flow resistance for the fluid through the pipe extension should be small, otherwise the benefits obtained could be outweighed by the detrimental effects of the increased flow resistance. A reasonable engineering approach could then be to make the flow resistance through the pipe extension at least ten times smaller than the flow resistance through the pump itself. Furthermore, the electrical resistance over the extension should be large in comparison to that of the pump to ensure that the current flows primarily through the pump rather than through the pipe extension. Applying the same engineering approach leads to a rule of thumb that the electrical resistance over the extension should be at least ten times that over the pump. Since the pump and the extension are made from the same pipe, the flow resistance relation will be governed by the length of the extension and the length of the pipe forming the pump. The length of the pipe forming the pump is just the circumference of the central member around which the pipe is wound times the number of turns the pipe is wound.

In any implementation, the current limiter is preferably structured and arranged such that a power loss generated in the current limiter is less than 10% of a power supplied to the electromagnetic pump. Further, in any implementation, the current limiter is preferably structured and arranged such that a pressure drop over the current limiter is less than 10% of a pressure generated by the electromagnetic pump.

The electrical resistance of the pump may, in a simple model, be seen as a cylindrical shell with a diameter corresponding to that of the core where the thickness of the shell is the outer diameter of the pipe and the length of the shell is the outer diameter of the pipe times the number of turns. The required number of turns will be proportional to desired pressure at the pump outlet, as understood from equation (1) above. The electrical resistance of the pipe extension may be seen as that of a cylinder. As readily appreciated, a shorter pipe extension leads to a smaller increase in flow resistance while a longer pipe extension leads to a larger increase in electrical resistance. A reasonable simplification that can be made for this rule-of-thumb discussion is that the resistivities of the pipe material and of the liquid metal are substantially the same. In general, however, these resistivities of course differ but the core of this discussion still holds.

From the above, it can be understood that if the diameter of the central member is small then the length of the pipe forming the pump and thus the flow resistance of the pump will, for a given pipe diameter, be correspondingly small and the length of the extension should thus be kept small in order not to have a too large flow resistance. On the other hand, the electrical resistance of the pump increases when the diameter of the central member decreases whereas the electrical resistance of the extension reduces as the length thereof is decreased. Thus, the diameter of the central member is preferably maintained above a limiting value to enable a choice of length of the pipe extension that fulfils both design criteria, i.e. sufficiently large electrical resistance and sufficiently low flow resistance.

The electrical resistance over the pump can be expressed as ${R}_{electric}^{pump} = \frac{ρ {∅}_{pipe} N}{π {∅}_{core} {∅}_{pipe}} = \frac{ρN}{π {∅}_{core}}$ (2) where *ρ* is the resistivity (assumed equal in pipe material and liquid metal), *N* is the number of turns, Ø*ₚᵢₚₑ* is the outer diameter of the pipe, and Ø*_{core}* is the diameter of the central member (core). The flow resistance through the pump may be written as ${R}_{flow}^{pump} = f \left({∅}_{i}, η\right) π {∅}_{core} N$ (3) where *f*(Ø*ᵢ*, *η*) is a function of the inner diameter of the pipe Ø*ᵢ* and the viscosity of the liquid metal *η*. For the pipe extension, assumed having a length *l*, we may write ${R}_{electric}^{extension} = \frac{4 lρ}{π {∅}_{pipe}^{2}}$ (4) and ${R}_{flow}^{extension} = f \left({∅}_{i}, η\right) l$ (5)

The two design criteria may now be written as $\begin{matrix}{R}_{electric}^{extension} > 10 ⋅ {R}_{electric}^{pump} & \left(6\right) \\ \to \frac{4 lρ}{π {∅}_{pipe}^{2}} > 10 \frac{ρN}{π {∅}_{core}} & \left(7\right) \\ \to l > \frac{10 N {∅}_{pipe}^{2}}{4 {∅}_{core}} & \left(8\right)\end{matrix}$ and $\begin{matrix}{R}_{flow}^{extension} < \frac{{R}_{flow}^{pump}}{10} & \left(9\right) \\ \to f \left({∅}_{i}, η\right) l < \frac{f \left({∅}_{i}, η\right) π {∅}_{core} N}{10} & \left(10\right) \\ \to l < \frac{π {∅}_{core} N}{10} & \left(11\right)\end{matrix}$ For these two criteria to be fulfilled at the same time it is required that $\frac{π {∅}_{core} N}{10} > \frac{10 N {∅}_{pipe}^{2}}{4 {∅}_{core}}$ (12) ${∅}_{core} > \sqrt{\frac{100 {∅}_{pipe}^{2}}{4 π}} \approx 2.8 {∅}_{pipe}$ (13) Thus, as a rule of thumb, there is a lower limit for the diameter of the central member (core diameter) for which the two design criteria can be met. With the model presented above, the lower limit of the diameter of the central member is about 2.8 times the outer diameter of the pipe.

Hence, in accordance with the principles disclosed herein, the above relation between the diameter of the central member (the core diameter) and the outer diameter of the pipe is taken into account as a design parameter for an electromagnetic pump arrangement. There is thus provided an electromagnetic pump arrangement configured for circulating a liquid metal, the arrangement comprising an electromagnetic pump, the electromagnetic pump having an inlet and an outlet, a core with a first diameter, a metal tube with a second diameter, wherein the metal tube is wound around the core a number of windings and forms a path for the liquid metal from the inlet to the outlet. The electromagnetic pump arrangement also comprises a conduit extension that may be implemented as the metal tube extending a length from the outlet. In such electromagnetic pump arrangement, the first diameter is at least 2.8 times as large as the second diameter. As shown by equation (11), the length of the conduit extension is preferably smaller than one tenth of a circumference of the core times the number of windings that the metal tube is wound around the core. Also, as shown by equation (8), it is preferred that the length of the conduit extension is larger than 2.5 times the number of windings times the pipe diameter squared divided by the core diameter.

In accordance with the teachings herein, there is also provided a system for generating a liquid metal jet. The system comprises an electromagnetic pump arrangement as disclosed herein, as well as a jet nozzle configured to receive liquid metal from the outlet of the electromagnetic pump and to form a liquid metal jet from the received liquid metal. Further, the system may comprise a jet receiver arranged to receive the liquid metal jet, wherein the inlet of the electromagnetic pump is arranged to receive liquid metal from the jet receiver. The system may be implemented in an electron impact X-ray source, and thus further comprise an electron source configured to generate an electron beam for impacting the liquid metal jet in an interaction region so that X-ray radiation is emitted from the interaction region. Preferably, the system has a first ground connection point upstream, in relation to the liquid metal jet, from the jet nozzle and a second ground connection point downstream from the jet nozzle.

When the electromagnetic pump arrangement is used in an X-ray source, an electron beam is arranged to impact the liquid metal jet in an interaction region. X-ray radiation is generated by interactions between high energy electrons comprised in the electron beam and the material in the liquid metal jet. The electron beam is typically generated from electrons emitted from a cathode accelerated by a suitable potential. The electron beam may further be directed and focused by means of an electron optical arrangement.

An exemplary method according to the invention will be described in connection with Fig. 5. A method for circulating liquid metal in a loop by means of an electromagnetic pump having an inlet and an outlet comprises applying 500 a driving voltage to the electromagnetic pump between the inlet and the outlet and limiting 501 a current flow from the outlet to the inlet through the loop. The step of limiting may comprise one or more of introducing a current limiting resistance in the loop, introducing a discontinuity in the flow of liquid metal within the loop, or diverting electrical current through a low-resistance current path. The method may further comprise collecting 502 liquid metal in a receiver located in a low-pressure chamber and pumping 503 liquid metal from the receiver to the electromagnetic pump using a pre-pump. In this further embodiment the step of limiting the current flow from the outlet to the inlet of the electromagnetic pump may comprise limiting flow of electrical current through the pre-pump.

## Claims

1. A system for generating a liquid metal jet comprising: an electromagnetic pump arrangement comprising an electromagnetic pump (101) comprising an inlet (101-i) and an outlet (101-o); a conduit (110) forming at least part of a path for the liquid metal to flow from the outlet (101-o) to the inlet (101-i); a power supply (105) configured to provide a driving voltage to the electromagnetic pump (101) between the inlet (101-i) and the outlet (101-o); and a current limiter configured to limit electrical current, caused by the driving voltage, flowing from the outlet to the inlet (101-i) through the conduit (110) and the liquid metal, wherein the current limiter comprises a conduit extension (106) between the outlet (101-o) and a first ground connection point (108) at which the conduit (110) is grounded; a jet nozzle (102) arranged to receive liquid metal from the outlet (101-o) of the electromagnetic pump (101) and shape the liquid metal into the liquid metal jet (109); a jet receiver (103) arranged to receive the liquid metal jet (109); wherein the inlet (101-i) of the electromagnetic pump (101) is arranged to receive liquid metal from the jet receiver (103); and wherein the electromagnetic pump arrangement is connected to ground potential at the first ground connection point (108) upstream of the jet nozzle (102) at the end of the conduit extension (106), and at a second ground connection point (107) downstream of the jet nozzle (102) at the inlet (101-i) of the electromagnetic pump (101).

2. The system of claim 1, wherein the current limiter further comprises an electrical restriction of the conduit (110).

3. The system of claim 1 or 2, wherein the current limiter further comprises a discontinuous flow of the liquid metal.

4. The system of claim 3, wherein the current limiter further comprises a peristaltic pump arranged between the conduit (110) and the inlet (101-i), and wherein the peristaltic pump comprises an electrically insulating tube, or an impeller arranged between the conduit (110) and the inlet (101-i), and wherein the impeller is made from an electrically insulating material.

5. The system of claim 3 or 4, wherein the current limiter further comprises a droplet-generating nozzle arranged in the path for the liquid metal.

6. The system of any one of the preceding claims, wherein the electromagnetic pump (101) comprises an internal conduit (110) providing at least a part of an internal flow path from the inlet (101-i) to the outlet (101-o), and an arrangement for providing a magnetic field and a current through the liquid metal, wherein the magnetic field and current are non-parallel.

7. The system of claim 1, wherein the electromagnetic pump (101) comprises a core with a first diameter, and a metal tube with a second diameter, wherein the metal tube is wound around the core a number of windings and forms a path for the liquid metal from the inlet (101-i) to the outlet (101-o); wherein the conduit extension (106) is implemented by the metal tube extending a length from the outlet (101-o); and wherein the first diameter is at least 2.8 times as large as the second diameter.

8. The system of claim 7, wherein the length of the conduit extension (106) is larger than 2.5 times the number of windings times the second diameter squared divided by the first diameter.

9. The system of claim 7 or 8, wherein the length of the conduit extension (106) is smaller than one tenth of a circumference of the core times the number of windings.

10. The system of any one of the preceding claims, further comprising an electron source configured to generate an electron beam impacting the liquid metal jet in an interaction region so that X-ray radiation is emitted from the interaction region.

11. A method for circulating liquid metal in a loop, at least partly formed by a conduit (110), by means of an electromagnetic pump having an inlet (101-i) and an outlet (101-o), comprising applying a driving voltage to the electromagnetic pump (101) between the inlet (101-i) and the outlet (101-o); and limiting an electrical current flow, caused by the driving voltage, from the outlet (101-o) to the inlet (101-i) through the loop by a conduit extension (106) between the outlet (101-o) and a first ground connection point (108) at which the conduit (110) is grounded; wherein limiting the electrical current flow from the outlet (101-o) to the inlet (101-i) through the loop further comprises diverting electrical current through a low-resistance current path by providing the first ground connection point (108) upstream of the jet nozzle (102) at the end of the conduit extension (106), and providing a second ground connection point (107) downstream of the jet nozzle (102) at the inlet (101-i) of the electromagnetic pump (101).

12. The method of claim 11, wherein limiting the electrical current flow from the outlet (101-o) to the inlet (101-i) through the loop further comprises introducing a discontinuous flow of the liquid metal through the loop.

13. The method of claim 11 or 12, wherein limiting the electrical current flow from the outlet (101-o) to the inlet (101-i) through the loop further comprises introducing a current-limiting resistance along the loop.

14. The method of any one of claims 11-13, comprising collecting liquid metal in a receiver located in a low-pressure chamber; and pumping liquid metal from the receiver to the electromagnetic pump (101) using a pre-pump (104); wherein limiting the electrical current flow from the outlet (101-o) to the inlet (101-i) of the electromagnetic pump (101) further comprises limiting flow of electrical current through the pre-pump (104).

15. The method of any one of claims 11-14, wherein the electromagnetic pump (101) comprises an internal conduit (110) providing at least a part of an internal flow path from the inlet (101-i) to the outlet (101-o), and an arrangement for providing a magnetic field and a current through the liquid metal, wherein the magnetic field and current are non-parallel.

## Patentansprüche

1. System zur Erzeugung eines Flüssigmetallstrahls, welches Folgendes umfasst: eine elektromagnetische Pumpenanordnung, die eine elektromagnetische Pumpe (101) mit einem Einlass (101-i) und einem Auslass (101-o) umfasst; eine Leitung (110), die zumindest einen Teil eines Strömungsweges für das Flüssigmetall vom Auslass (101-o) zum Einlass (101-i) bildet; eine Stromversorgung (105), die zum Bereitstellen einer Antriebsspannung an die elektromagnetische Pumpe (101) zwischen dem Einlass (101-i) und dem Auslass (101-o) konfiguriert ist; und einen Strombegrenzer, der zum Begrenzen eines durch die Antriebsspannung verursachten elektrischen Stroms, der vom Auslass durch die Leitung (110) und das Flüssigmetall zum Einlass (101-i) fließt, konfiguriert ist, wobei der Strombegrenzer eine Leitungsverlängerung (106) zwischen dem Auslass (101-o) und einem ersten Erdungsanschlusspunkt (108), an welchem die Leitung (110) geerdet ist, umfasst; eine Strahldüse (102), die zum Aufnehmen von Flüssigmetall vom Auslass (101-o) der elektromagnetischen Pumpe (101) und zum Formen des Flüssigmetalls zu einem Flüssigmetallstrahl (109) geeignet ist; einen Strahlaufnehmer (103), der zum Aufnehmen des Flüssigmetallstrahls (109) geeignet ist; wobei der Einlass (101-i) der elektromagnetischen Pumpe (101) zum Aufnehmen von Flüssigmetall vom Strahlaufnehmer (103) geeignet ist; und wobei die elektromagnetische Pumpenanordnung stromaufwärts der Strahldüse (102) am Ende der Leitungsverlängerung (106) am ersten Erdungsanschlusspunkt (108) und stromabwärts der Strahldüse (102) am Einlass (101-i) der elektromagnetischen Pumpe (101) an einem zweiten Erdungsanschlusspunkt (107) mit Erdpotential verbunden ist.

2. System nach Anspruch 1, wobei der Strombegrenzer ferner eine elektrische Begrenzung der Leitung (110) umfasst.

3. System nach Anspruch 1 oder 2, wobei der Strombegrenzer ferner einen diskontinuierlichen Fluss des Flüssigmetalls umfasst.

4. System nach Anspruch 3, wobei der Strombegrenzer ferner eine Peristaltikpumpe umfasst, die zwischen der Leitung (110) und dem Einlass (101-i) angeordnet ist, und wobei die Peristaltikpumpe einen elektrisch isolierenden Schlauch oder ein Laufrad, das zwischen der Leitung (110) und dem Einlass (101-i) angeordnet ist, umfasst, und wobei das Laufrad aus einem elektrisch isolierenden Material besteht.

5. System nach Anspruch 3 oder 4, wobei der Strombegrenzer ferner eine im Strömungsweg für das Flüssigmetall angeordnete, Tröpfchen erzeugende Düse umfasst.

6. System nach einem der vorhergehenden Ansprüche, wobei die elektromagnetische Pumpe (101) eine interne Leitung (110), welche zumindest einen Teil eines internen Strömungsweges vom Einlass (101-i) zum Auslass (101-o) bereitstellt, und eine Anordnung zum Bereitstellen eines Magnetfeldes und eines Stroms durch das Flüssigmetall umfasst, wobei das Magnetfeld und der Strom nicht parallel verlaufen.

7. System nach Anspruch 1, wobei die elektromagnetische Pumpe (101) einen Kern mit einem ersten Durchmesser und ein Metallrohr mit einem zweiten Durchmesser umfasst, wobei das Metallrohr in einer bestimmten Anzahl von Windungen um den Kern gewickelt ist und einen Weg für das Flüssigmetall vom Einlass (101-i) zum Auslass (101-o) bildet; wobei die Leitungsverlängerung (106) durch das Metallrohr implementiert wird, das sich vom Auslass (101-o) über eine bestimmte Länge erstreckt; und wobei der erste Durchmesser mindestens 2,8-mal so groß wie der zweite Durchmesser ist.

8. System nach Anspruch 7, wobei die Länge der Leitungsverlängerung (106) größer als das 2,5-fache des Produkts aus der Anzahl der Windungen und dem Quadrat des zweiten Durchmessers geteilt durch den ersten Durchmesser ist.

9. System nach Anspruch 7 oder 8, wobei die Länge der Leitungsverlängerung (106) kleiner als ein Zehntel eines Umfangs des Kerns multipliziert mit der Anzahl der Windungen ist.

10. System nach einem der vorhergehenden Ansprüche, welches ferner eine Elektronenquelle umfasst, die zum Erzeugen eines Elektronenstrahls konfiguriert ist, welcher in einem Interaktionsbereich auf den Flüssigmetallstrahl trifft, sodass aus dem Interaktionsbereich Röntgenstrahlung ausgesandt wird.

11. Verfahren zum Umwälzen von Flüssigmetall in einem Kreislauf, welcher zumindest teilweise durch eine Leitung (110) gebildet wird, mithilfe einer elektromagnetischen Pumpe mit einem Einlass (101-i) und einem Auslass (101-o), welches das Anlegen einer Antriebsspannung an die elektromagnetische Pumpe (101) zwischen dem Einlass (101-i) und dem Auslass (101-o) sowie das Begrenzen eines durch die Antriebsspannung verursachten elektrischen Stromflusses vom Auslass (101-o) zum Einlass (101-i) durch den Kreislauf mittels einer Leitungsverlängerung (106) zwischen dem Auslass (101-o) und einem ersten Erdungsanschlusspunkt (108), an welchem die Leitung (110) geerdet ist, umfasst; wobei das Begrenzen des elektrischen Stromflusses vom Auslass (101-o) durch den Kreislauf zum Einlass (101-i) ferner das Umleiten des elektrischen Stroms über einen Strompfad mit geringem Widerstand umfasst, indem der erste Erdungsanschlusspunkt (108) stromaufwärts der Strahldüse (102) am Ende der Leitungsverlängerung (106) bereitgestellt wird und ein zweiter Erdungsanschlusspunkt (107) stromabwärts der Strahldüse (102) am Einlass (101-i) der elektromagnetischen Pumpe (101) bereitgestellt wird.

12. Verfahren nach Anspruch 11, wobei das Begrenzen des elektrischen Stromflusses vom Auslass (101-o) zum Einlass (101-i) durch den Kreislauf ferner das Einleiten eines diskontinuierlichen Flusses des Flüssigmetalls durch den Kreislauf umfasst.

13. Verfahren nach Anspruch 11 oder 12, wobei das Begrenzen des elektrischen Stromflusses vom Auslass (101-o) zum Einlass (101-i) durch den Kreislauf ferner das Einbringen eines strombegrenzenden Widerstands entlang des Kreislaufs umfasst.

14. Verfahren nach einem der Ansprüche 11-13, welches das Sammeln von Flüssigmetall in einem Aufnehmer, der sich in einer Niederdruckkammer befindet, und das Pumpen von Flüssigmetall aus dem Aufnehmer zu der elektromagnetischen Pumpe (101) mithilfe einer Vorpumpe (104) umfasst; wobei das Begrenzen des elektrischen Stromflusses vom Auslass (101-o) zum Einlass (101-i) der elektromagnetischen Pumpe (101) ferner das Begrenzen des elektrischen Stromflusses durch die Vorpumpe (104) umfasst.

15. Verfahren nach einem der Ansprüche 11-14, wobei die elektromagnetische Pumpe (101) eine interne Leitung (110), welche zumindest einen Teil eines internen Strömungsweges vom Einlass (101-i) zum Auslass (101-o) bereitstellt, und eine Anordnung zum Bereitstellen eines Magnetfeldes und eines Stroms durch das Flüssigmetall umfasst, wobei das Magnetfeld und der Strom nicht parallel verlaufen.

## Revendications

1. Système de génération d'un jet de métal liquide comprenant : un agencement de pompe électromagnétique comprenant une pompe électromagnétique (101) dotée d'une entrée (101-i) et d'une sortie (101-o) ; un conduit (110) formant au moins une partie d'un trajet pour l'écoulement du métal liquide de la sortie (101-o) vers l'entrée (101-i) ; une alimentation électrique (105) configurée pour fournir une tension d'attaque à la pompe électromagnétique (101) entre l'entrée (101-i) et la sortie (101-o) ; et un limiteur de courant configuré pour limiter le courant électrique, provoqué par la tension d'attaque, circulant de la sortie vers l'entrée (101-i) à travers le conduit (110) et le métal liquide, dans lequel le limiteur de courant comprend un prolongement de conduit (106) situé entre la sortie (101-o) et un premier point de connexion à la masse (108) où le conduit (110) est mis à la masse ; une buse de jet (102) agencée pour recevoir du métal liquide provenant de la sortie (101-o) de la pompe électromagnétique (101) et pour façonner le métal liquide en un jet de métal liquide (109) ; un récepteur de jet (103) agencé pour recevoir le jet de métal liquide (109) ; dans lequel l'entrée (101-i) de la pompe électromagnétique (101) est agencée pour recevoir du métal liquide provenant du récepteur de jet (103) ; et dans lequel l'agencement de pompe électromagnétique est connecté au potentiel de masse au niveau du premier point de connexion à la masse (108) en amont de la buse de jet (102), à l'extrémité du prolongement de conduit (106), et au niveau d'un deuxième point de connexion à la masse (107) en aval de la buse de jet (102), au niveau de l'entrée (101-i) de la pompe électromagnétique (101).

2. Système selon la revendication 1, dans lequel le limiteur de courant comprend en outre une restriction électrique du conduit (110).

3. Système selon la revendication 1 ou 2, dans lequel le limiteur de courant comprend en outre un dispositif pour assurer un écoulement discontinu du métal liquide.

4. Système selon la revendication 3, dans lequel le limiteur de courant comprend en outre une pompe péristaltique disposée entre le conduit (110) et l'entrée (101-i) et dans lequel la pompe péristaltique comprend un tube électriquement isolant ou une roue à aubes disposée entre le conduit (110) et l'entrée (101-i) et dans lequel la roue à aubes est constituée d'un matériau électriquement isolant.

5. Système selon la revendication 3 ou 4, dans lequel le limiteur de courant comprend en outre une buse de génération de gouttelettes disposée sur le trajet du métal liquide.

6. Système selon une quelconque des revendications précédentes, dans lequel la pompe électromagnétique (101) comprend un conduit interne (110) formant au moins une partie d'un trajet d'écoulement interne allant de l'entrée (101-i) à la sortie (101-o), ainsi qu'un agencement pour générer un champ magnétique et un courant traversant le métal liquide, dans lequel le champ magnétique et le courant sont non parallèles.

7. Système selon la revendication 1, dans lequel la pompe électromagnétique (101) comprend un noyau présentant un premier diamètre et un tube métallique présentant un deuxième diamètre, dans lequel le tube métallique est enroulé autour du noyau selon un certain nombre de spires et forme un trajet pour le métal liquide de l'entrée (101-i) à la sortie (101-o) ; dans lequel le prolongement de conduit (106) est constitué par le tube métallique s'étendant sur une certaine longueur depuis la sortie (101-o) ; et dans lequel le premier diamètre est au moins 2,8 fois supérieur au deuxième diamètre.

8. Système selon la revendication 7, dans lequel la longueur du prolongement de conduit (106) est supérieure à 2,5 fois le produit du nombre de spires par le carré du deuxième diamètre, divisé par le premier diamètre.

9. Système selon la revendication 7 ou 8, dans lequel la longueur du prolongement de conduit (106) est inférieure au produit d'un dixième d'une circonférence du noyau par le nombre de spires.

10. Système selon une quelconque des revendications précédentes, comprenant en outre une source d'électrons configurée pour générer un faisceau d'électrons frappant le jet de métal liquide dans une zone d'interaction, de sorte qu'un rayonnement de rayons X soit émis depuis la zone d'interaction.

11. Procédé de circulation de métal liquide dans une boucle, formée au moins partiellement par un conduit (110), au moyen d'une pompe électromagnétique dotée d'une entrée (101-i) et d'une sortie (101-o), comprenant l'application d'une tension d'attaque à la pompe électromagnétique (101) entre l'entrée (101-i) et la sortie (101-o) ; et la limitation d'un flux de courant électrique, provoqué par la tension d'attaque, circulant de la sortie (101-o) vers l'entrée (101-i) à travers la boucle, au moyen d'un prolongement de conduit (106) situé entre la sortie (101-o) et un premier point de connexion à la masse (108) où le conduit (110) est mis à la masse ; dans lequel la limitation du flux de courant électrique de la sortie (101-o) vers l'entrée (101-i) à travers la boucle comprend en outre le détournement du courant électrique via un trajet de courant à faible résistance en prévoyant le premier point de connexion à la masse (108) en amont de la buse de jet (102), à l'extrémité du prolongement de conduit (106), et en prévoyant un deuxième point de connexion à la masse (107) en aval de la buse de jet (102), au niveau de l'entrée (101-i) de la pompe électromagnétique (101).

12. Procédé selon la revendication 11, dans lequel la limitation du flux de courant électrique de la sortie (101-o) vers l'entrée (101-i) à travers la boucle comprend en outre l'introduction d'un écoulement discontinu du métal liquide à travers la boucle.

13. Procédé selon la revendication 11 ou 12, dans lequel la limitation du flux de courant électrique de la sortie (101-o) vers l'entrée (101-i) à travers la boucle comprend en outre l'introduction d'une résistance de limitation de courant le long de la boucle.

14. Procédé selon une quelconque des revendications 11 à 13, comprenant la collecte de métal liquide dans un récepteur situé dans une chambre à basse pression ; et le pompage du métal liquide depuis le récepteur vers la pompe électromagnétique (101) à l'aide d'une pré-pompe (104) ; dans lequel la limitation du flux de courant électrique de la sortie (101-o) vers l'entrée (101-i) de la pompe électromagnétique (101) comprend en outre la limitation du flux de courant électrique à travers la pré-pompe (104).

15. Procédé selon une quelconque des revendications 11 à 14, dans lequel la pompe électromagnétique (101) comprend un conduit interne (110) fournissant au moins une partie d'un trajet d'écoulement interne allant de l'entrée (101-i) à la sortie (101-o) et un agencement pour générer un champ magnétique et faire passer un courant à travers le métal liquide, dans lequel le champ magnétique et le courant sont non parallèles.
